# EUROPEAN PATENT APPLICATION

(11) **EP 4 752 996 A1**
(43) Date of publication of application: **03.06.2026**
(21) Application number: 25213781.5
(22) Date of filing: 05.11.2025
(51) Int. Cl.: H01M 10/04, H01M 50/209, H01M 50/30, H01M 10/42

(54) **DEVICE FOR VERIFYING AND CORRECTING BATTERY CELL POSITION AND METHOD OF VERIFYING AND CORRECTING BATTERY CELL POSITION USING THE SAME**

(30) Priority: 27.11.2024 KR 20240172116
(71) Applicant: SAMSUNG SDI CO., LTD., Yongin-si, Gyeonggi-do 17084 (KR)
(72) Inventor: KIM, Gangyul, 17084 Yongin-si (KR)
(74) Representative: Maiwald GmbH

(57) **Abstract**

Provided are a device for verifying and correcting a battery cell position and a method of verifying and correcting the battery cell position using the same. The device includes at least one camera spaced apart from a battery module including a plurality of battery cells, a fixed portion configured to support one side of the battery module, a movable portion disposed on another side of the battery module and configured to apply pressure to the battery module, and a jig located on a lower side of the battery module and provided with a plurality of holes.

## Description

### FIELD

The disclosure relates to a device for verifying and correcting a battery cell position and a method of verifying and correcting a battery cell position using the same.

### BACKGROUND

A secondary battery is a battery which may be charged and discharged, as opposed to a primary battery which is not rechargeable. Small capacity secondary batteries are used in small, portable electronic devices such as smartphones, feature phones, notebook computers, digital cameras, and camcorders, while large capacity secondary batteries are widely used as motor driving power sources in hybrid and electric vehicles, as power storage batteries, or the like. Such a secondary battery includes an electrode assembly including a positive electrode and a negative electrode, a case accommodating the electrode assembly, electrode terminals connected to the electrode assembly, or the like.

The herein information described in the description of the related art is intended only to enhance understanding of the background of the disclosure and may therefore include information which does not constitute the prior art.

### SUMMARY

The disclosure provides a device for verifying and correcting a battery cell position and a method of verifying and correcting a battery cell position using the same, the device being able to estimate the position of a vent located on a bottom portion of a battery cell and correct the position of the battery cell by adjusting pressure applied to the battery module, thereby matching the estimated position of the vent to a hole formed in a jig for the battery cell having the vent located on the bottom portion.

However, the technical problems to be solved by the disclosure are not limited to those described herein, and other problems not mentioned will be apparent to a person of ordinary knowledge in the art from the following description of the disclosure.

According to an aspect, a device for verifying and correcting a battery cell position is provided, the device including: at least one camera spaced apart from a battery module including a plurality of battery cells; a fixed portion configured to support one side of the battery module; a movable portion disposed on another side of the battery module and configured to apply pressure to the battery module; and a jig located on a lower side of the battery module and provided with a plurality of holes.

In embodiments, each of the plurality of battery cells may include a vent located on a bottom surface of the battery cell.

In embodiments, each of the plurality of holes may have an area equal to an area of the vent.

In embodiments, the plurality of holes may be located to overlap the vents, respectively.

In embodiments, the device may further include an estimator configured to estimate a position of the vent based on an outline of the vent.

In embodiments, the device may further include a gauge configured to set positions of the plurality of holes as reference positions, and calculate a separation distance between the reference positions and the positions of the vents.

In embodiments, the device may further include a controller configured to set the separation distance calculated by the gauge as a correction value.

In embodiments, the device may further include a position corrector configured to move the movable portion by the correction value.

Preferably, the plurality of battery cells may be arranged in a direction, and the movable portion may be movable in the direction in which the plurality of battery cells is arranged.

Preferably, each of the plurality of battery cells may include terminal portions located on a top surface of each of the battery cells.

According to an aspect, a method of verifying and correcting a battery cell position is provided, the method including: estimating a position of a vent of a battery cell; determining whether the estimated position of the vent is in position with respect to a selected reference position; and when the estimated position of the vent is determined to be out of position with respect to the selected reference position, correcting the position of the battery cell, wherein the operation of determining whether the estimated position of the vent is in position includes: comparing the position of the vent and the selected reference position; and calculating a separation distance with respect to the selected reference position, and wherein the operation of correcting the position of the battery cell includes: setting the separation distance as a correction value; and moving the battery cell by the correction value.

In embodiments, the operation of estimating the position of the vent may include estimating a center of the battery cell, wherein the operation of estimating the center of the battery cell includes: measuring a first point which is a center of a first terminal of the battery cell; measuring a second point which is a center of a second terminal of the battery cell; calculating a third point which is an average point of the first point and the second point; and assuming the third point to be the center of the battery cell.

In embodiments, the operation of estimating the position of the vent may include: calculating an outline of the vent by adding size values of the vent to the assumed center of the battery cell; and assuming the outline of the vent to be the position of the vent.

In embodiments, the operation of comparing the position of the vent and the selected reference position may determine whether there is interference between the position of the vent and the selected reference position.

In embodiments, the operation of comparing the position of the vent and the selected reference position may include, when it is determined that there is interference between the position of the vent and the selected reference position, determining that the position of the vent is out of position.

In embodiments, the operation of calculating the separation distance with respect to the selected reference position may measure a spacing based on a degree of the interference between the position of the vent and the selected reference position.

In embodiments, the operation of moving the battery cell by the correction value may compress or decompress the battery cell by the correction value.

Preferably, the vent may be located on a bottom surface of the battery cell.

Preferably, the battery cell may include terminal portions located on a top surface of the battery cell.

Preferably, the battery cell may include a plurality of battery cells arranged in parallel in a direction, and a pair of end plates may be disposed at outermost sides of the plurality of battery cells to compress the plurality of battery cells.

Preferably, a computer program is provided, comprising instructions which, when the program is executed by a computer, cause the computer to carry out the method of of verifying and correcting a battery cell position, as described herein.
Preferably, a computer-readable medium is provided, comprising instructions which, when executed by a computer, cause the computer to carry out method of verifying and correcting a battery cell position, as described herein.

### BRIEF DESCRIPTION OF THE DRAWINGS

The accompanying drawings illustrate example embodiments of the disclosure and, together with the following detailed description, serve to provide further understanding of the technical spirit of the disclosure, and the disclosure is therefore not to be construed as being limited to the drawings in which:
FIG. 1 is an exploded perspective view schematically showing an embodiment of a device for verifying and correcting a battery cell position according to embodiments of the disclosure;
FIG. 2 is a perspective view schematically showing an example of the battery cell of the battery module of FIG. 1;
FIG. 3 is a cross-sectional view schematically illustrating an example of the III-III' cross-section of FIG. 2;
FIG. 4 is a plan view showing the top of the battery module of FIG. 1 to explain the operation of the device for verifying and correcting a battery cell position;
FIG. 5 is a plan view showing the top of the battery module of FIG. 1 to explain the operation of the device for verifying and correcting a battery cell position;
FIG. 6 is a view illustrating the positions of a jig positioned below the battery module and the estimated position of a vent to explain the operation of the device for verifying and correcting a battery cell position;
FIG. 7 is a view illustrating the positions of a jig positioned below the battery module and the estimated position of a vent to explain the operation of the device for verifying and correcting a battery cell position;
FIG. 8 is a block diagram of the device for verifying and correcting a battery cell position according to embodiments of the disclosure; and
FIG. 9 is a flowchart illustrating a method of verifying and correcting a battery cell position according to embodiments of the disclosure.

### DETAILED DESCRIPTION

Hereinafter, example embodiments of the disclosure will be described in detail with reference to the accompanying drawings. First, the terms and words used in this specification and the claims are not to be construed in their ordinary or dictionary sense, but rather in a sense and concept consistent with the technical idea of the disclosure, based on the principle that the inventor may define the concept of terms as he/she sees fit to best describe his/her disclosure. Accordingly, it is to be understood that the embodiments described herein and the configurations illustrated in the drawings are only some of the most desirable embodiments of the disclosure and are not intended to be exhaustive of the technical ideas of the disclosure, and that there may be various equivalents and modifications which may substitute the embodiments and the configurations at the time of filing.

Furthermore, when used herein, the words "comprise" and "include" and/or "comprising" and "including" are intended to specify the presence of the shapes, numbers, steps, actions, members, elements, and/or groups thereof mentioned and are not intended to exclude the presence or addition of one or more other shapes, numbers, actions, members, elements, and/or groups thereof.

Furthermore, for ease understanding of the disclosure, the accompanying drawings may not be drawn to actual scale, but the dimensions of some elements may be exaggerated. Furthermore, the same elements in different embodiments may be assigned with the same reference numerals.

Although terms, such as "first" and "second", are used to describe various elements, the elements are not limited by these terms. These terms are used only to distinguish one element from another, and a first element may be a second element unless clearly indicated otherwise.

Throughout the specification, each element may be singular or plural, unless clearly indicated otherwise.

It is to be understood that an element is referred to as being "above (or below)" or "on (or under)" another, the element may be on an upper surface (or a lower surface) of the other element and an intervening element may be present between the element and the other element on (or below) the element.

It is to be also understood that when an element is referred to as being "connected to", "coupled to" or "joined to" another element, the element be directly connected or joined to the other element, or an intervening element may be present, or each element may be "connected to", "coupled to" or "joined to" each other through another element. Furthermore, when a portion is referred to as being electrically coupled to another portion, this may include not only a direct connection, but also a connection with another intervening element.

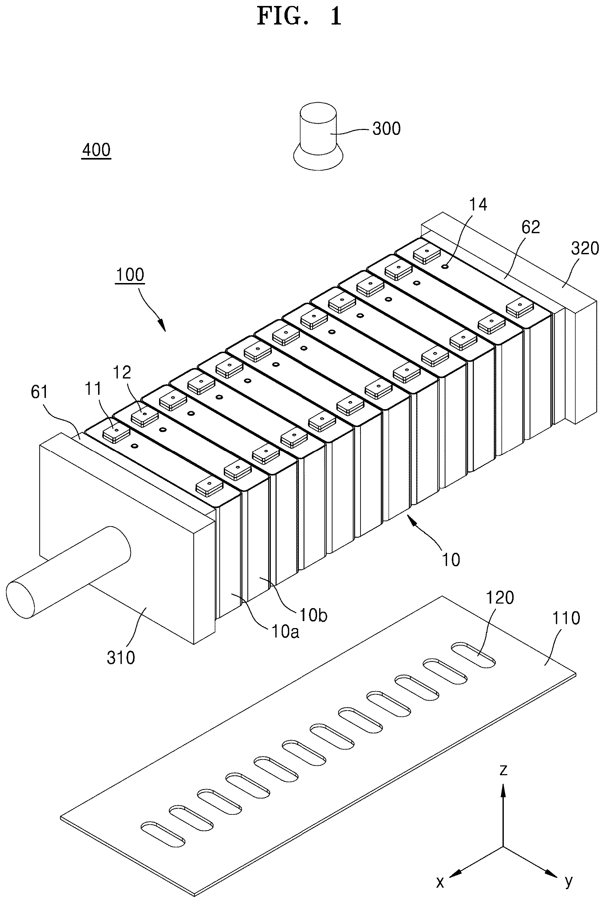

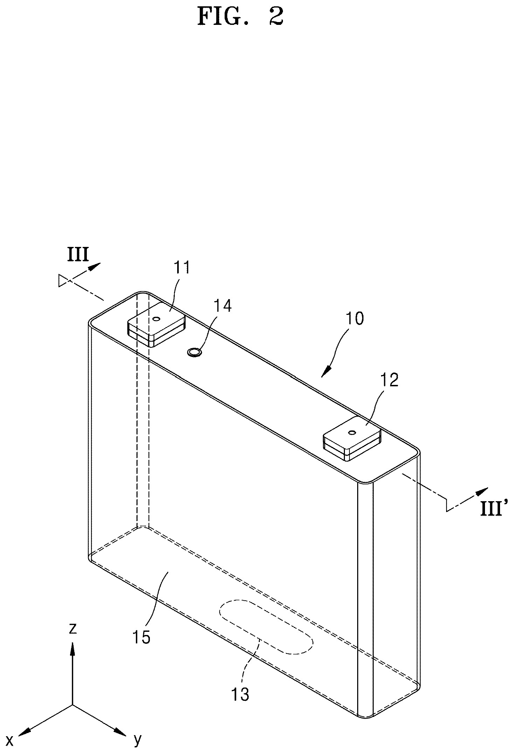

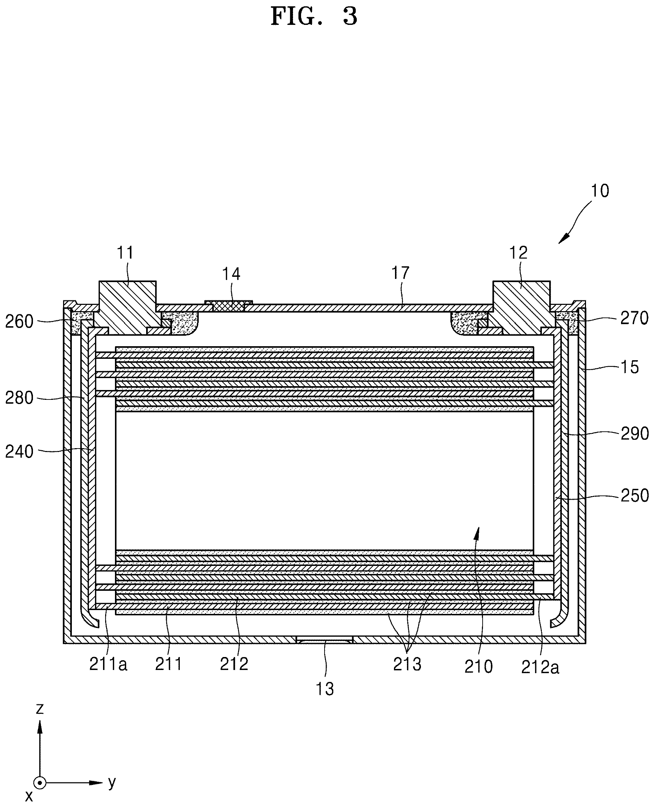

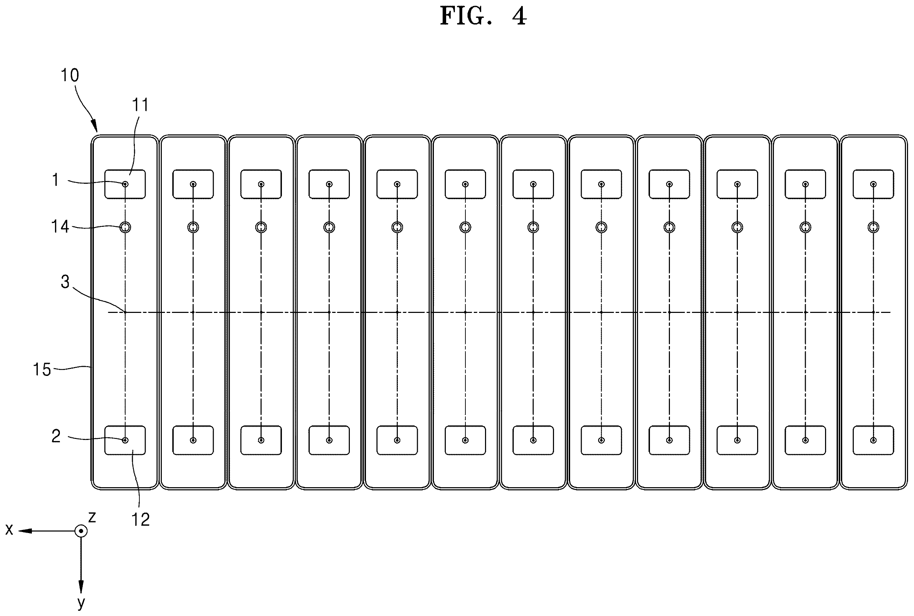

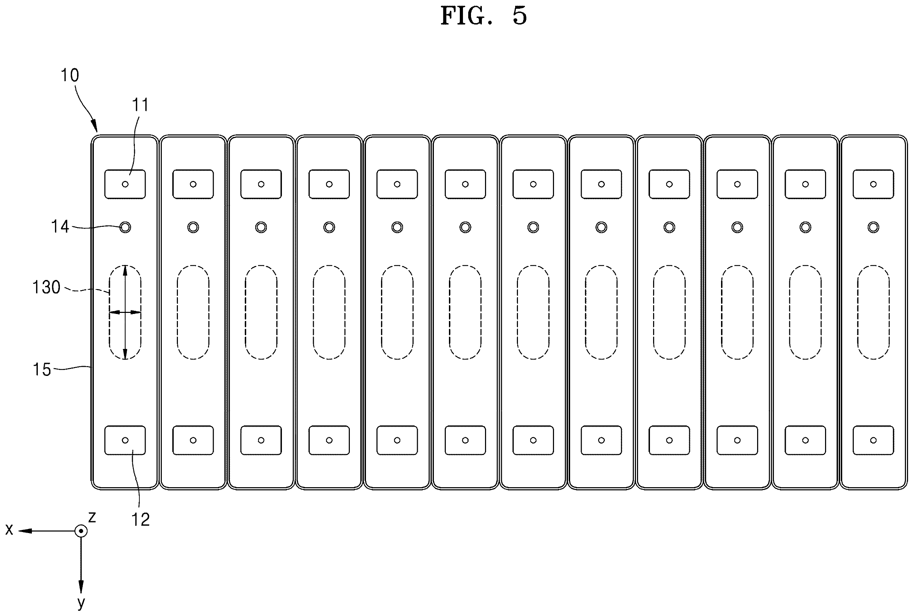

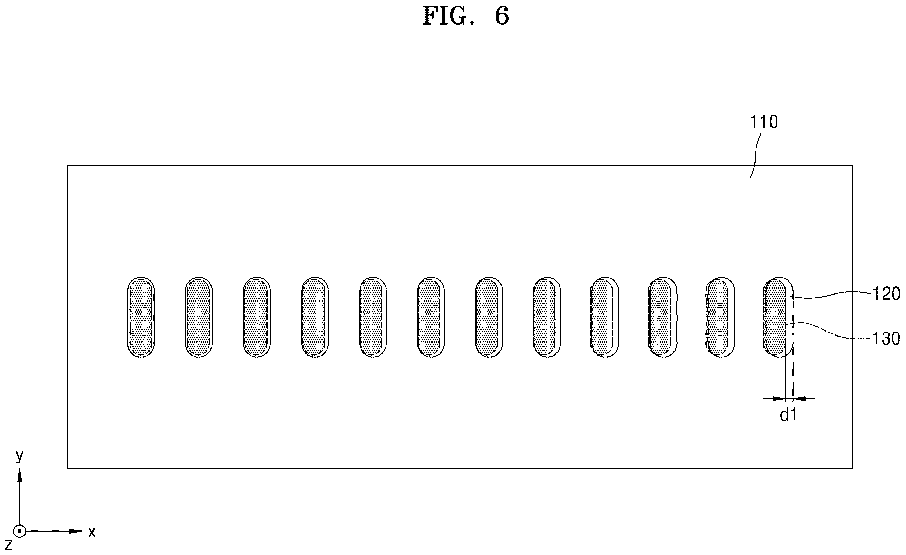

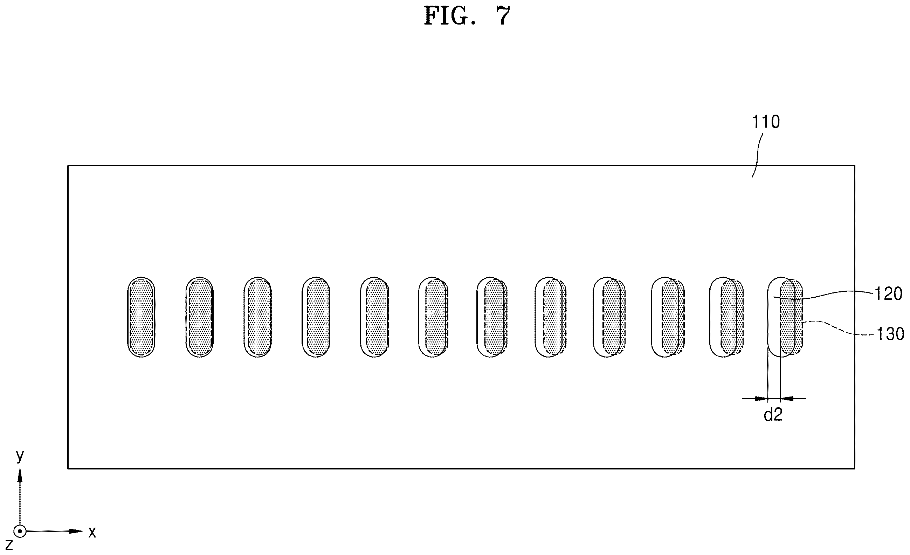

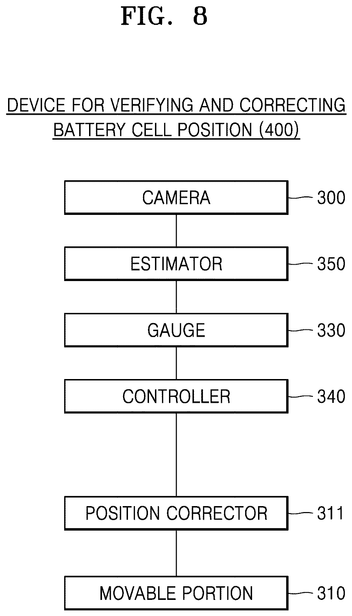

FIG. 1 is an exploded perspective view schematically showing embodiments of a device for verifying and correcting a battery cell position according to embodiments of the disclosure, FIG. 2 is a perspective view schematically showing an example of the battery cell of the battery module of FIG. 1, FIG. 3 is a cross-sectional view schematically illustrating an example of the III-III' cross-section of FIG. 2, FIG. 4 is a plan view showing the top of the battery module of FIG. 1 to explain the operation of the device for verifying and correcting a battery cell position, FIG. 5 is a plan view showing the top of the battery module of FIG. 1 to explain the operation of the device for verifying and correcting a battery cell position, FIG. 6 is a view illustrating the positions of a jig positioned below the battery module and the estimated position of a vent to explain the operation of the device for verifying and correcting a battery cell position, FIG. 7 is a view illustrating the positions of a jig positioned below the battery module and the estimated position of a vent to explain the operation of the device for verifying and correcting a battery cell position, and FIG. 8 is a block diagram of the device for verifying and correcting a battery cell position according to embodiments of the disclosure.

First, referring to FIGS. 1 to 3, a device 400 for verifying and correcting a battery cell position according to embodiments of the disclosure may include a fixed portion 320 configured to support one side of a battery module 100 including a plurality of battery cells 10, a movable portion 310 configured to adjust pressure applied to the battery module 100 on another side of the battery module 100, and a jig 110 located on a lower side of the battery module 100 and provided with a plurality of holes 120.

The battery module 100 may include a plurality of battery cells 10, and the plurality of battery cells 10 may be arranged in a first direction such that wide surfaces thereof face each other.

Each of the plurality of battery cells 10 may be provided with terminal portions 11 and 12 and a vent 13 which is a passage for releasing gas generated therein. The terminal portions 11 and 12 of each of the battery cells 10 may be a first terminal 11 and a second terminal 12 having different polarities. For example, in case that the first terminal 11 is a positive terminal, the second terminal 12 may be a negative terminal, and in another example, in case that the first terminal 11 is a negative terminal, the second terminal 12 may be a positive terminal. For example, the first terminal 11 and the second terminal 12 may be electrically differently polarized and are not limited to a particular polarity.

The battery cell 10 may include a case 15, as well as an electrode assembly 210 and an electrolyte solution housed in the case 15, as shown in FIG. 3. The electrode assembly 210 and the electrolyte may electrochemically react to generate energy.

The battery cell 10 may include at least one electrode assembly 210 formed by winding a positive electrode 211, a negative electrode 212, and a separator 213, which is an insulator provided between the positive electrode 211 and the negative electrode 212, and the case 15 in which the electrode assembly 210 is accommodated.

The battery cell 10 according to embodiments may be a lithium ion battery cell, which is described as being prismatic by way of example. However, the disclosure is not limited thereto, and the disclosure may be applied to battery cells of various shapes, such as lithium polymer battery cells or cylindrical battery cells.

Each of the positive electrode 211 and the negative electrode 212 may include a coated portion, which is a region where an active material is applied to a collector (or current collector) formed of a thin metal foil, and an uncoated portion 211a or 212a, which is a region where no active material is applied.

The positive electrode 211 and the negative electrode 212 may be wound after the separator 213, which is an insulator, is provided between the positive electrode 211 and the negative electrode 212. However, the disclosure is not limited thereto, and the electrode assembly 210 may have a structure in which a plurality of sheets of positive electrodes 211 and a plurality of sheets of negative electrodes 212 are alternately stacked on the opposite sides of the separator 213.

The case 15 may form the overall contour of the battery cell 10, and may be formed of a conductive metal such as aluminum, an aluminum alloy, or nickel-plated steel. Furthermore, the case 15 may provide a space in which the electrode assembly 210 is accommodated.

The battery cell 10 may include a cap plate 17 covering an opening in the case 15, and the case 15 and the cap plate 17 may be formed of a conductive material. In some embodiments, the first terminal 11 and the second terminal 12, which are electrically connected to the positive electrode 211 or the negative electrode 212, may be disposed to protrude outward through the cap plate 17.

Furthermore, the outer circumferential surfaces of the upper posts of the first terminal 11 and the second terminal 12 protruding outward from the cap plate 17 may be threaded, and may be fixed to the cap plate 17 with nuts.

However, the disclosure is not limited thereto, and each of the first terminal 11 and the second terminal 12 may have a rivet structure to be riveted to or may be welded to the cap plate 17.

Furthermore, the cap plate 17 may be implemented as a thin plate and may be coupled to the opening in the case 15, and the cap plate 17 may be provided with an electrolyte inlet 14 in which a sealing stopper may be disposed.

The first terminal 11 and the second terminal 12 may be electrically connected to collectors including first and second collectors 240 and 250 (hereinafter referred to as positive and negative electrode collectors) welded to the positive electrode uncoated portion 211a or the negative electrode uncoated portion 212a.

For example, the first terminal 11 and the second terminal 12 may be welded to the positive and negative electrode collectors 240 and 250. However, the disclosure is not limited thereto, and the first and second terminals 11 and 12 and the positive and negative electrode collectors 240 and 250 may be integrally joined.

Furthermore, insulating members may be disposed between the electrode assembly 210 and the cap plate 17. In some embodiments, the insulating members may include first and second lower insulating members 260 and 270, in which each of the first and second lower insulating members 260 and 270 may be disposed between the electrode assembly 210 and the cap plate 17.

Furthermore, according to embodiments, between the insulating member and the first terminal 11 and the second terminal 12, a first end of the separating member may be disposed, which may be disposed opposite a one side of the electrode assembly 210.

In some embodiments, the separating members may include first and second separating members 280 and 290.

Accordingly, first ends of the first and second separating members 280 and 290, which may be disposed opposite the side of the electrode assembly 210, may be disposed between the first and second lower insulating members 260 and 270 and the first and second terminals 11 and 12.

Finally, the first terminal 11 and the second terminal 12 welded to the positive and negative electrode collectors 240 and 250 may be coupled to the first and second lower insulating members 260 and 270 and the first ends of the first and second separating members 280 and 290.

The battery module 100 may be seated and fixed on the fixed portion 320, which supports one side of the battery module 100, and the movable portion 310 may be disposed on another side of the battery module 100. Thus, the fixed portion 320 and the movable portion 310 may be disposed to face each other on the opposite sides of the battery module 100.

The movable portion 310 may slide and move in a direction in which the battery cells 10 are arranged. Thus, the movable portion 310 may apply pressure to the battery cells 10. For example, the movable portion 310 may slide to move in the direction in which the battery cells 10 are arranged to apply pressure to the battery cells 10 or to move away from the direction in which the battery cells 10 are arranged to adjust the pressure applied to the battery module 100.

In some embodiments, the one side of the battery module 100 may be fixed, pressure may be applied to the battery module 100 due to forward or backward movement of the movable portion 310, and the position of the battery cell 10 may be corrected to prevent defects in the manufacture of a battery module/pack.

The device 400 for verifying and correcting a battery cell position according to the disclosure may include the jig 110 located on the lower side of the battery module 100.

A plurality of holes 120 may be formed in the jig 110. In an example, the jig 110 may be a representation of a cooling plate of the battery module 100, and the holes 120 formed in the jig 110 may have the same shape as openings formed in the cooling plate.

In some embodiments, the openings formed in the cooling plate may have the same shape as the vents 13 of the battery cells 10, and the positions and sizes of the holes 120 formed in the jig 110 may follow the manufacturing conditions of the openings formed in the cooling plate. Thus, the areas of the holes 120 formed in the jig 110 may be the same as the areas of the vents 13 of the battery cells 10.

Furthermore, each of the plurality of battery cells 10 may include a vent 13, in which the vent 13 may be located on the bottom surface of the battery cell 10.

In some embodiments, the plurality of holes 120 in the jig 110 may be located to overlap the vents 13, respectively. For example, the jig 110 may be located below the battery cell 10 such that the vents 13 located on the bottom surfaces of the battery cells 10 overlap and overlie the holes 120 formed in the jig 110.

The positions of the holes 120 formed in the jig 110 located on the bottom side of the battery module 100 may be reference positions for estimating the positions of the vents 13 located on the bottom surfaces of the battery cells 10. The estimated position of each of the vents 13 may be compared with the herein reference position to determine whether the vent 13 is in position and to correct the position of the battery cell 10.

The device 400 for verifying and correcting a battery cell position of according to the disclosure may also include at least one camera 300.

The camera 300 may be spaced apart from the battery module 100, which includes the plurality of battery cells 10.

Each of the plurality of battery cells 10 may include the terminal portions 11 and 12 located on the top surface of the battery cell 10, and the camera 300 may be located above the plurality of battery cells 10 and used to capture images from the terminal portions 11 and 12 of each of the battery cells 10.

The camera 300 may capture images from the terminal portions 11 and 12 and may measure the centers of the terminal portions 11 and 12 based on the captured images.

For example, the camera 300 may obtain center data of the electrodes of the battery cells 10 by vision inspection. In some embodiments, the camera 300 may be a vision camera for vision inspection, but is not limited thereto.

Referring to FIG. 4, the camera 300 may measure a first point 1 which is the center of the first terminal and a second point 2 which is the center of the second terminal.

The device 400 for verifying and correcting a battery cell position may further include an estimator 350, in which the estimator 350 may calculate a third point 3 which is an average of the first point 1 and the second point 2 measured by the camera 300, and assume the third point 3 to be the center of each of the battery cells 10.

The terminal portions 11 and 12 which include opposite terminals of the battery cell 10 may be provided to be symmetrical about the center of the battery cell 10. Therefore, the average value of the center of the first terminal and the center of the second terminal may be assumed to be the center of the battery cell.

Referring to FIG. 5, the estimator 350 may calculate a vent outline 130 by adding horizontal and vertical size values to the estimated center of the cell to correspond to the size of the vent 13 of the battery cell 10. In some embodiments, the size values may vary depending on the number of plural battery cells 10 arranged in the battery module 100 and the shape of the battery module 100.

The estimator 350 may assume the calculated vent outline 130 to be the position of the vent 13.

The vent 13 of the battery cell 10 may be formed such that the center of the vent 13 matches the center of the battery cell 10. Because the center of the vent 13 may be located below the center of the estimated cell, the vent outline 130 calculated by adding the size values of the vent 13 to the estimated cell center may be assumed to be the position of the vent 13.

The device 400 for verifying and correcting a battery cell position of according to the disclosure may further include a gauge 330 configured to set the positions of the plurality of holes 120 formed in the jig 110 as the reference positions.

The gauge 330 may calculate a separation distance by comparing the estimated positions of the vents 13 with the reference positions. The separation distance may be a distance which must be corrected for the estimated positions of the vents 13 to be in position.

In case that interference occurs between information on the estimated position of the vent 13 and information on the reference position, the estimated position of the vent 13 may be determined to be out of position. In some embodiments, the gauge 330 may calculate the separation distance of the estimated position of the vent 13 and the reference position.

For example, in case that the estimated position of vent 13 and the reference position are arranged to overlap, in case that the information on the estimated position of vent 13 does not match the information on the reference position, it may be determined that interference has occurred. In some embodiments, the degree of discrepancy between the information on the estimated position of the vent 13 and the information on the reference position may be defined as the degree of interference.

In case that the information on the estimated position of the vent 13 does not match the information on the reference position, the separation distance may be, for example, the difference between the last coordinate value of the estimated positions of the vents 13 and the last coordinate value of the reference positions.

In case that the position of the vent 13 is estimated to be biased toward the fixed portion 320 from the reference position, it may be determined that the battery module 100 is out of position due to over-compression. In another example, in case that the estimated position of the vent 13 is biased toward the movable portion 310 from the reference position, it may be determined that the battery module 100 is out of position due to under-compression.

Referring to FIG. 6, in case that the spacing between the estimated positions of the vents 13 is less than the spacing between the reference positions, thereby resulting in a bias toward the fixed portion 320, decompression may be determined to be necessary. In some embodiments, a separation distance d1 may be a distance by which the movable portion 310 must move backwards to be in position. With the backward movement of the movable portion 310, the position of the battery cell 10 may be corrected so that the estimated position of the vent 13 matches the reference position, thereby preventing defects in the manufacture of a battery module/pack.

Referring to FIG. 7, in case that the spacing between the estimated positions of the vents 13 is greater than the spacing between the reference positions, thereby resulting in a bias toward the movable portion 310, compression may be determined to be necessary. In some embodiments, a separation distance d2 may be a distance by which the movable portion 310 must move forwards to be in position. With the forward movement of the movable portion 310, the position of the battery cell 10 may be corrected so that the estimated position of the vent 13 matches the reference position, thereby preventing defects in the manufacture of a battery module/pack.

Referring to FIG. 8, the device 400 for verifying and correcting a battery cell position of according to the disclosure may further include a controller 340 configured to set the separation distance calculated by the gauge 330 as a correction value.

The controller 340 may set the correction value based on the separation distance calculated by the gauge 330 and the information determined, and may set the correction value as a required travel distance of the movable portion 310.

The device 400 for verifying and correcting a battery cell position may further include a position corrector 311 configured to move the movable portion 310 by the correction value. The position corrector 311 may move the movable portion 310 by the correction value set by the controller 340 to be closer to or away from the direction in which the battery cells 10 are arranged.

Thus, the movable portion 310 may correct the position of the battery cell 10 by compressing or decompressing the battery module 100, and may match the estimated position of the vent 13 to the reference position.

For example, in case that it is determined that the battery module 100 is overcompressed because the last coordinate value of the estimated positions of the vents 13 is less than the last coordinate value of the reference positions, the movable portion 310 may be moved by the correction value in a direction away from the battery module 100 to match the estimated position of the vent 13 to the reference position.

In another example, in case that it is determined that the battery module 100 is under-compressed because the last coordinate value of the positions of the vents 13 is greater than the last coordinate value of the reference positions, the movable portion 310 may be moved by the correction value in a direction away from the battery module 100 to match the estimated position of the vent 13 to the reference position.

That is, the movable portion 310 may be moved based on information on the separation distance calculated by the gauge 330 so that the vent 13 is in position. At this time, the position of the battery module 100 may be corrected by compressing and recovering each of the battery cells 10.

The device 400 for verifying and correcting a battery cell position of according to the disclosure may estimate the vent outline 130 calculated by the estimator 350 as the position of the vent 13 based on the centers of the terminal portions 11 and 12 taken by the camera 300. The gauge 330 may calculate the separation distance of the estimated positions of the vents 13 and the reference positions, and the controller 340 may set the separation distance as the correction value. The position corrector 311 may correct the position of the battery cell 10 by moving the movable portion 310 by the set correction value, thereby matching the estimated position of the vent 13 to the reference position.

A pair of end plates 61 and 62 which compress the battery cells 10 may be disposed on the outermost sides of the plurality of battery cells 10. When the battery cells 10 expand in response to the charging and discharging operations of the battery cells 10, the end plates 61 and 62 may absorb pressure caused by the expansion of the battery cells 10, thereby preventing degradation of the battery cells 10 and improving the structural stability of the battery module 100.

After the estimated position of the vent 13 and the reference position have been matched, the pair of end plates 61 and 62, side plates, and a bottom plate may be connected, and the battery cells 10 may be fixed in the corrected positions, thereby being manufactured into a battery module/pack.

The side plates may support the side surfaces of the battery cells 10, and the bottom plate may support the bottom surfaces of the battery cells 10. The pair of end plates 61 and 62, the side plates, and the bottom plate may be connected by members such as bolts or the like.

Spacers may be disposed between the plurality of battery cells 10. Each of the spacers may be disposed between the adjacent battery cells 10 with a size corresponding to that of a wide surface of the battery cells 10.

The spacers may be resilient spacers, and the resilient force of the spacers may provide uniform compression and recovery forces as the positions of the battery cells 10 are corrected.

In case that the spacing between the estimated positions of the vents 13 is greater than the spacing between the reference positions, the spacers may be compressed by pressing the battery module 100, and the positions of the vents 13 may be corrected so that the distance between adjacent battery cells 10 is reduced. In another example, in case that the spacing between the estimated positions of the vents 13 is set to be less than the spacing between the reference positions, the spacers may be recovered by depressing the battery module 100, and the positions of the vents 13 may be corrected so that the distance between adjacent battery cells 10 is increased.

By adjusting the pressure applied to the battery module 100 and correcting the positions of the battery cells 10 by compressing or recovering the spacers, the estimated positions of the vents 13 and the reference positions may be matched to prevent defects in the manufacture of a battery module/pack.

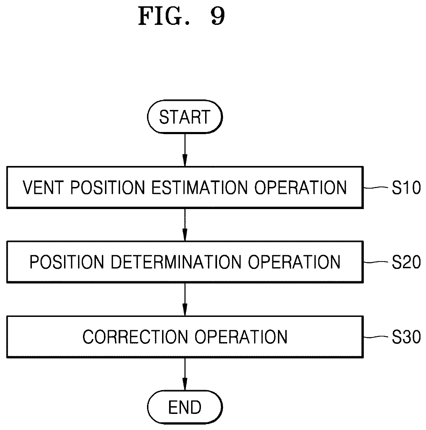

FIG. 9 is a flowchart illustrating a method of verifying and correcting a battery cell position according to embodiments of the disclosure.

Referring to FIG. 9, the method of verifying and correcting a battery cell position according to the disclosure may include a vent position estimation operation S10, a position determination operation S20, and a correction operation S30.

In some embodiments, the vent of the battery cell may be disposed on the bottom surface, and the terminal portions may be disposed on the top surface of the battery cell.

A pair of end plates may be disposed on the outermost sides of the battery cells to apply pressure to the battery cells. The end plates may absorb the pressure generated when the battery cells expand under the charging and discharging operations of the battery cells, thereby preventing degradation of the battery cells and improving the structural stability of the battery module.

The vent position estimation operation S10 of estimating the position of the vent of the battery cell may include a center estimation operation of estimating the center of the battery cell. In some embodiments, the center estimation operation may include, for the battery cell including the terminal portions, measuring the centers of the two terminals, calculating an average point, and assuming the average point to be the center of the cell.

In some embodiments, the center estimation operation may include measuring a first point which is the center of the first terminal and a second point which is the center of the second terminal, calculating a third point which is the average point, and assuming the average point to be the center of the cell.

For example, in the operation of measuring the first point and the second point, center data for the electrodes of the battery cell may be obtained by vision inspection.

In the operation of calculating the third point, an assumed value for the center of the cell may be obtained by calculating an average of the first point and the second point.

The terminal portions of the battery cell may be formed to be symmetrical about the center of the battery cell. Therefore, the average value of the center of the first terminal and the center of the second terminal may be assumed to be the center of the cell.

Furthermore, the vent position estimation operation S10 may include an operation of calculating the outline of the vent by adding size values of the vent to the center of the estimated cell and an operation of assuming the outline of the vent to be the position of the vent.

In the operation of calculating the outline of the vent, the outline may be obtained by adding the horizontal and vertical size values to the center of each of the battery cells estimated by the center estimation operation to correspond to the vent size of the battery cell. The size values of the vents may vary depending on the number of plural battery cells arranged in the battery module and the shape of the battery module.

The vent of the battery cell may be formed such that the center of the vent matches the center of the battery cell. Because the center of the vent may be located below the estimated center of the cell, the vent outline calculated by adding the size values of the vent to the estimated center of the battery cell may be assumed to be the position of the vent.

The position determination operation S20 of determining whether the estimated position of the vent is in position with respect to a reference position may include a comparison operation of comparing the estimated position of the vent and the selected reference position and an operation of calculating a separation distance of the estimated positions of the vents and the reference positions.

The comparison operation may determine whether there is interference between the estimated position of the vent and the reference position. In case that there is the interference between information on the position of the vent and information on the reference position, the position of the vent may be determined to be out of position.

In some embodiments, the reference positions may be the positions of holes formed in the jig disposed on the lower side of the battery module. In an example, the jig may be a representation of a cooling plate of the battery module. In some embodiments, the cooling plate may have openings formed in the same shape as the vents of the battery cells, and the holes formed in the jig may have the same shape as the openings formed in the cooling plate. Therefore, the positions and sizes of the holes formed in the jig may correspond to the positions and sizes of the vents.

In case that the vent is disposed such that the estimated position of the vent and the reference position overlap, in case that the information on the estimated position of the vent and the information on the reference position do not match, it may be determined that interference has occurred. In some embodiments, the degree of discrepancy between the estimated position of the vent and the reference position may be defined as the degree of interference.

The operation of calculating the separation distance with respect to the reference positions may be an operation of measuring a distance based on the degree of interference between the position of the vent and the reference position. The separation distance may be, for example, a distance between the last vent position and the last reference position.

The method of verifying and correcting a battery cell position according to the disclosure may include the correction operation S30 of correcting the position of the battery cell in case that the position of the vent is determined to be out of position in the position determination operation S20.

The correction operation S30 may include an operation of setting the separation distance as a correction value and an operation of moving the battery cell by the correction value. The correction value may be a distance by which the correction is necessary to correct the estimated position of the vent to be in position with respect to the reference position.

The operation of moving the battery cell may compress or decompress the battery cells by the calibration value.

For example, in case that the spacing between the estimated positions of the vents is less than the spacing between the reference positions, decompression may be determined to be necessary. By decompressing the battery cell by the correction value, the spacing between the estimated positions of the vents may be increased to correct the biased positions of the battery cells.

In another example, in case that the spacing between the estimated positions of the vents is greater than the spacing between the reference positions due to a bias, compression may be determined to be necessary. By compressing the battery cell by the correction value, the spacing between the estimated positions of the vents may be reduced to correct the biased positions of the battery cells.

Accordingly, the estimated positions of the vents may be corrected to the reference positions by the correction operation of moving the battery cells by the set correction value, thereby preventing defects in battery module/pack manufacturing.

After the estimated positions of the vents are matched to the reference positions, a pair of end plates, side plates, and a bottom plate may be connected together and of the battery cells may be fixed in the corrected positions, thereby being manufactured into a battery module/pack.

The side plates may support the side surfaces of the battery cells, and the bottom plate may support the bottom surfaces of the battery cells. The pair of end plates, the side plates, and the bottom plate may be connected by members such as bolts or the like.

In case that the vent is present on the bottom portion of the battery cell, it is difficult to determine the position of the vent because the vent array is wrapped in an insulating film. Therefore, the disclosure is intended to estimate the position of the vent and correct the position of the battery cell based on the estimated position of the vent, thereby preventing defects in the manufacture of a battery module/pack.

According to the embodiments of the disclosure, the device for verifying and correcting a battery cell position may estimate the position of the vent and compare the position with a reference position to determine whether the vent is in position and correct the position of the battery cell. Accordingly, even in the case in which the vent is located on the bottom portion of the cell, the estimated position of the vent may be matched to the hole formed in the jig, thereby preventing defects in the manufacture of a battery module/pack.

However, the effects of the disclosure are not limited to those described herein, and other technical effects not mentioned will be apparent to a person of ordinary knowledge in the art from the following description of the disclosure.

## Claims

1. A device (400) for verifying and correcting a battery cell position, the device (400) comprising:
at least one camera spaced apart from a battery module (100) comprising a plurality of battery cells (10);
a fixed portion configured to support one side of the battery module (100);
a movable portion (310) disposed on another side of the battery module (100) and configured to apply pressure to the battery module (100); and
a jig located on a lower side of the battery module (100) and provided with a plurality of holes (120).

2. The device (400) of claim 1, wherein each of the plurality of battery cells (10) comprises a vent (13) located on a bottom surface of the battery cell (10).

3. The device (400) of claim 2, wherein each of the plurality of holes (120) has an area equal to an area of the vent (13).

4. The device (400) of claim 2 or 3, wherein the plurality of holes (120) are located to overlap the vents (13), respectively.

5. The device (400) of any one of the claims 2 to 4, further comprising an estimator (350) configured to estimate a position of the vent (13) based on an outline (130) of the vent (13).

6. The device (400) of claim 5, further comprising a gauge (330) configured to
set positions of the plurality of holes (120) as reference positions, and
calculate a separation distance between the reference positions and the positions of the vents (13).

7. The device (400) of claim 6, further comprising a controller (340) configured to set the separation distance calculated by the gauge (330) as a correction value.

8. The device (400) of claim 7, further comprising a position corrector (311) configured to move the movable portion (310) by the correction value.

9. A method of verifying and correcting a battery cell position, the method comprising:
estimating (S10) a position of a vent (13) of a battery cell (10);
determining (S20) whether the estimated position of the vent (13) is in position with respect to a selected reference position; and
if the estimated position of the vent (13) is determined to be out of position with respect to the selected reference position, correcting (S30) the position of the battery cell (10),
wherein the operation of determining whether the estimated position of the vent (13) is in position comprises:
comparing the position of the vent (13) and the selected reference position; and
calculating a separation distance with respect to the selected reference position, and
wherein the operation of correcting the position of the battery cell (10) comprises:
setting the separation distance as a correction value; and
moving the battery cell (10) by the correction value.

10. The method of claim 9, wherein the operation of estimating the position of the vent (13) comprises estimating a center of the battery cell (10), wherein the operation of estimating the center of the battery cell (10) comprises:
measuring a first point (1) which is a center of a first terminal (11) of the battery cell (10);
measuring a second point (2) which is a center of a second terminal (12) of the battery cell (10);
calculating a third point (3) which is an average point of the first point (1) and the second point (2); and
assuming the third point (3) to be the center of the battery cell (10).

11. The method of claim 10, wherein the operation of estimating the position of the vent (13) comprises:
calculating an outline (130) of the vent (13) by adding size values of the vent (13) to the assumed center of the battery cell (10); and
assuming the outline (130) of the vent (13) to be the position of the vent (13).

12. The method of any one of the claims 9 to 11, wherein the operation of comparing the position of the vent (13) and the selected reference position determines whether there is interference between the position of the vent (13) and the selected reference position.

13. The method of any one of the claims 9 to 12, wherein when it is deteremined that there is the interference between the position of the vent (13) and the selected reference position, determining that the position of the vent (13) is out of position.

14. The method of any one of the claims 9 to 13, wherein the operation of calculating the separation distance with respect to the selected reference position measures a spacing based on a degree of the interference between the position of the vent (13) and the selected reference position.

15. The method of any one of the claims 9 to 14, wherein the operation of moving the battery cell (10) by the correction value compresses or decompresses the battery cell (10) by the correction value.
